# FASCICULE DE BREVET EUROPEEN

(11) **EP 4 442 577 B1**
(45) Date de publication et mention de la délivrance du brevet: **21.05.2025**
(21) Numéro de dépôt: 24162133.3
(22) Date de dépôt: 07.03.2024
(51) Int. Cl.: B64D 27/40

(54) **MÂT RÉACTEUR POUR FIXER UN MOTEUR D'AÉRONEF**
REAKTORMAST ZUR BEFESTIGUNG EINES FLUGZEUGMOTORS
JET ENGINE PYLON FOR ATTACHING AN AIRCRAFT ENGINE

(30) Priorité: 06.04.2023 FR 2303417
(43) Date de publication de la demande: 09.10.2024
(73) Titulaire: Airbus Operations (S.A.S.), 31060 Toulouse Cedex 9 (FR)
(72) Inventeur: COMBES, Pierre-Antoine, TOULOUSE (FR); DE NICOLA, Marc, TOULOUSE (FR); VIGNES, Jean-Baptiste, TOULOUSE (FR); BERJOT, Michael, TOULOUSE (FR)
(74) Mandataire: Airbus-OPS SAS

(56) Documents cités:
- EP-A1- 1 103 463
- FR-A1- 3 101 675
- US-A1- 2008 251 634
- US-A1- 2017 057 652
- US-A1- 2020 298 986

## Description

### DOMAINE TECHNIQUE

La présente invention concerne un mât réacteur permettant d'assurer la fixation d'un moteur d'aéronef, ainsi qu'un aéronef comportant au moins un tel mât réacteur.

### ÉTAT DE LA TECHNIQUE ANTÉRIEURE

Un aéronef comporte classiquement au moins un moteur, en particulier un turboréacteur. Sous chaque aile et pour chaque moteur, l'aéronef comporte un mât réacteur qui est fixé à la structure de l'aile et qui s'étend en-dessous de l'aile et le moteur est suspendu sous le mât réacteur.

Le moteur est fixé au mât réacteur par l'intermédiaire de plusieurs systèmes d'attache moteur répartis entre l'avant et l'arrière du moteur.

L'aéronef comporte par exemple un système d'attache moteur avant et un système d'attache moteur arrière qui sont fixés respectivement à l'avant et à l'arrière du moteur entre ledit moteur et le mât réacteur. L'aéronef comporte généralement aussi un dispositif de reprise d'efforts de poussée du moteur entre le système d'attache moteur avant et le système d'attache moteur arrière et constitué de deux bielles fixées de part et d'autre du moteur entre le moteur et le mât réacteur.

Certains systèmes d'attache moteur de l'état de la technique comportent des poutres qui sont fixées sous le mât réacteur et les dimensions verticales cumulées du mât réacteur et de la poutre sont alors relativement importantes ce qui empêche de rapprocher le moteur du mât réacteur.

Un mât réacteur selon l'art antérieur est décrit dans le document FR3101675.

### EXPOSE DE L'INVENTION

Un objet de la présente invention est de proposer un mât réacteur qui présente un encombrement vertical réduit ce qui permet de rapprocher le moteur du mât réacteur.

À cet effet, est proposé un mât réacteur pour la fixation d'un moteur d'un aéronef, le mât réacteur comportant :
- une structure destinée à être fixée sous une aile de l'aéronef et présentant deux faces latérales où la structure est traversée par un tunnel où chacune des deux extrémités du tunnel débouche au niveau d'une des faces latérales,
- un palonnier logé dans le tunnel et fixé de manière articulée à chaque face latérale par un premier point de liaison, où une première extrémité du palonnier présente un premier alésage, et où une deuxième extrémité du palonnier présente deux deuxièmes alésages destinés à former chacun un deuxième point de liaison avec le moteur, et
- une bielle fixée de manière articulée audit premier alésage et présentant deux troisièmes alésages destinés à former chacun, un troisième point de liaison avec le moteur.

Un tel mât réacteur présente ainsi la capacité d'accrocher le moteur et ceci dans un encombrement réduit verticalement et avec une traînée moindre.

Avantageusement, chaque premier point de liaison est constitué d'une première chape femelle fixée à l'extérieur de la face latérale correspondante, d'une chape mâle unique constituée par le palonnier, où le palonnier est disposé à l'intérieur de chaque première chape femelle, d'un premier axe de liaison et d'une première bague rotulée insérée et fixée dans un alésage du palonnier prévu à cet effet et où le premier axe de liaison est logé et fixé dans la première bague rotulée et logé libre en rotation dans des alésages de la première chape femelle prévus à cet effet.

Avantageusement, la bielle est constituée de deux manilles disposées de part et d'autre de la première extrémité du palonnier, chacun des troisièmes alésages est constitué d'un troisième sous-alésage réalisé dans l'une des manilles et d'un troisième sous-alésage réalisé dans l'autre des manilles, une troisième bague rotulée est insérée et fixée dans le premier alésage du palonnier et un troisième axe de liaison est logé et fixé dans la troisième bague rotulée et logé libre en rotation dans un quatrième sous-alésage prévu à cet effet dans chaque manille.

L'invention propose également un aéronef comportant une aile, un moteur présentant une structure et un mât réacteur selon l'une des variantes précédentes, où la structure du mât réacteur est fixée sous l'aile et où les deux deuxièmes alésages forment chacun un deuxième point de liaison avec la structure du moteur, et où les deux troisièmes alésages forment chacun, un troisième point de liaison avec la structure du moteur.

Avantageusement, chaque deuxième point de liaison est constitué d'une deuxième chape femelle solidaire de la structure du moteur, d'une chape mâle unique constituée par la deuxième extrémité du palonnier où le palonnier est disposé à l'intérieur de chaque deuxième chape femelle, d'un deuxième axe de liaison et d'une deuxième bague rotulée insérée et fixée dans le deuxième alésage du palonnier et où le deuxième axe de liaison est logé et fixé dans la deuxième bague rotulée et logé libre en rotation dans des alésages prévus à cet effet dans la deuxième chape femelle.

Avantageusement, chaque troisième point de liaison est constitué d'une paire de troisièmes chapes femelles solidaires de la structure du moteur, pour chaque troisième chape femelle de la paire, d'une chape mâle constituée par une des bielles disposées à l'intérieur de ladite troisième chape femelle, d'un quatrième axe de liaison et d'une quatrième bague rotulée insérée et fixée dans les troisièmes sous-alésages de chaque manille et où le quatrième axe de liaison est logé fixé dans la quatrième bague rotulée et logé libre en rotation dans les troisièmes sous-alésages.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue de côté schématique d'un moteur et d'un mât réacteur selon l'invention,
[Fig. 3] est une vue en perspective éclatée du mât réacteur selon l'invention,
[Fig. 4] est une vue en perspective du côté bâbord du mât réacteur de la Fig. 3, et
[Fig. 5] est une vue en perspective du côté tribord du mât réacteur de la Fig. 3.

### EXPOSÉ DÉTAILLÉ DE MODES DE RÉALISATION

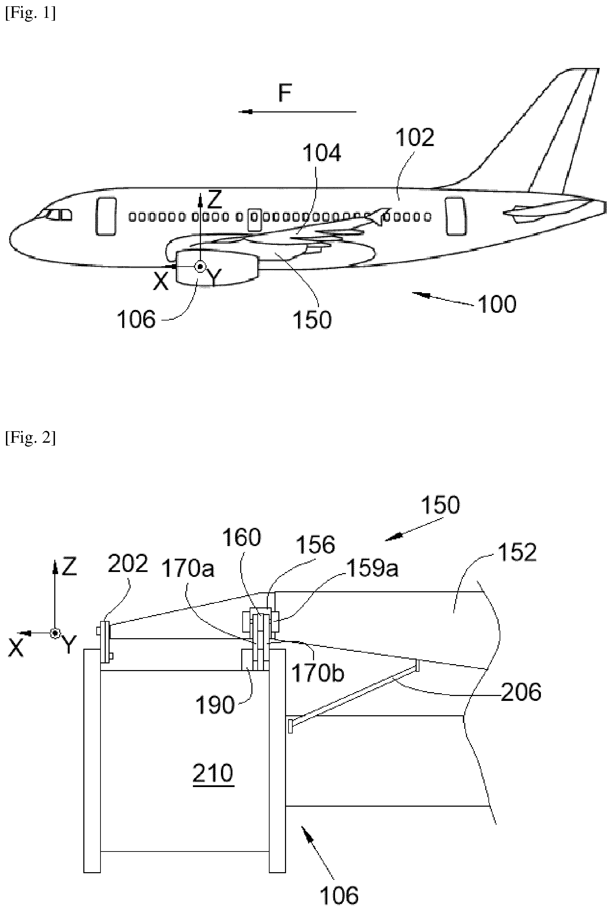

Dans la description qui suit, les termes relatifs à une position sont pris en référence à un aéronef en position d'avancement, c'est-à-dire comme il est représenté sur la Fig. 1, où la flèche F représente la direction d'avancement.

La Fig. 1 montre un aéronef 100 qui présente un fuselage 102 auquel est fixée de part et d'autre une aile 104. L'aéronef 100 comporte également au moins un moteur 106, en particulier un turboréacteur, qui est fixé sous un mât réacteur 150 selon l'invention qui comporte une structure (152) qui est elle-même fixée sous une aile 104 par tous moyens de fixation appropriés et connus de l'homme du métier.

Dans la description qui suit, et par convention, on appelle X la direction longitudinale du mât réacteur 150 qui est globalement horizontale et orientée positivement dans la direction d'avancement F de l'aéronef 100, on appelle Y la direction transversale du mât réacteur 150 qui est horizontale lorsque l'aéronef 100 est au sol, et Z la direction verticale ou hauteur verticale lorsque l'aéronef 100 est au sol, ces trois directions X, Y et Z étant orthogonales entre elles.

Les termes « avant » et « arrière » sont à considérer par rapport à la direction d'avancement F de l'aéronef 100 sous l'effet de la poussée fournie par le moteur 106 en fonctionnement.

La Fig. 2 montre une représentation schématique du moteur 106 et du mât réacteur 150 fixés l'un à l'autre par des systèmes d'attache moteur. Le mât réacteur 150 présente un plan médian vertical XZ passant par la direction longitudinale X et la direction verticale Z.

La Fig. 2 montre ainsi un système d'attache moteur avant 202 assurant la fixation entre une partie avant d'une structure 210 du moteur 106 et la structure 152 du mât réacteur 150.

Dans le mode de réalisation de l'invention présenté sur la Fig. 2, l'aéronef 100 comporte également un dispositif de reprise d'efforts de poussée 206 comportant deux bielles disposées de part et d'autre du plan médian vertical XZ et où chaque bielle est fixée entre la structure 210 du moteur 106 et la structure 152 du mât réacteur 150. L'aéronef 100 peut également comporter une attache moteur arrière qui n'est pas représentée sur la Fig. 2 mais qui serait disposée à l'arrière du dispositif de reprise d'efforts de poussée 206 et fixée entre la structure 210 du moteur 106 et la structure 152 du mât réacteur 150. Les systèmes d'attache moteur avant 202 et arrière ainsi que le dispositif de reprise d'efforts de poussée 206 ne sont pas décrits plus avant car ils ne font pas partie de l'invention et peuvent prendre toutes les formes connues par l'homme du métier.

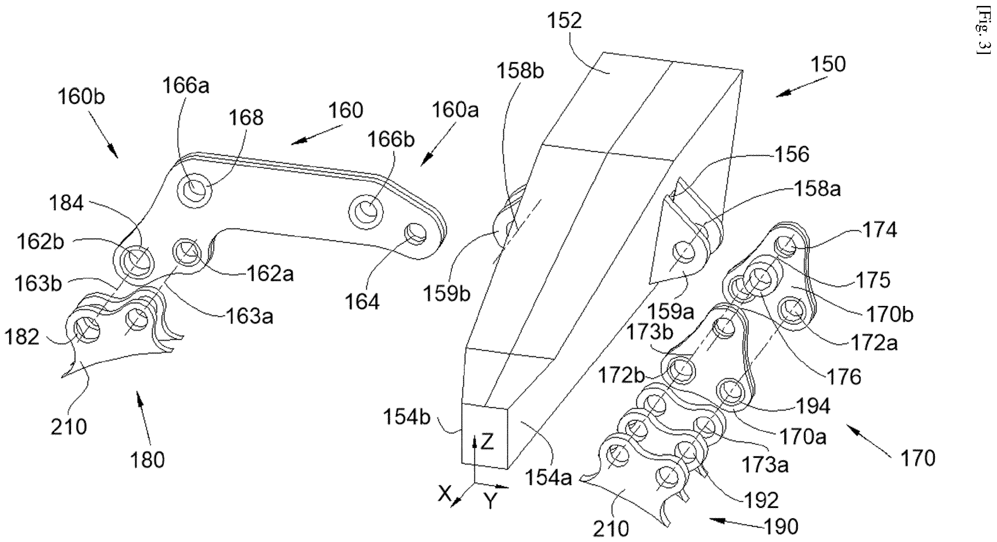

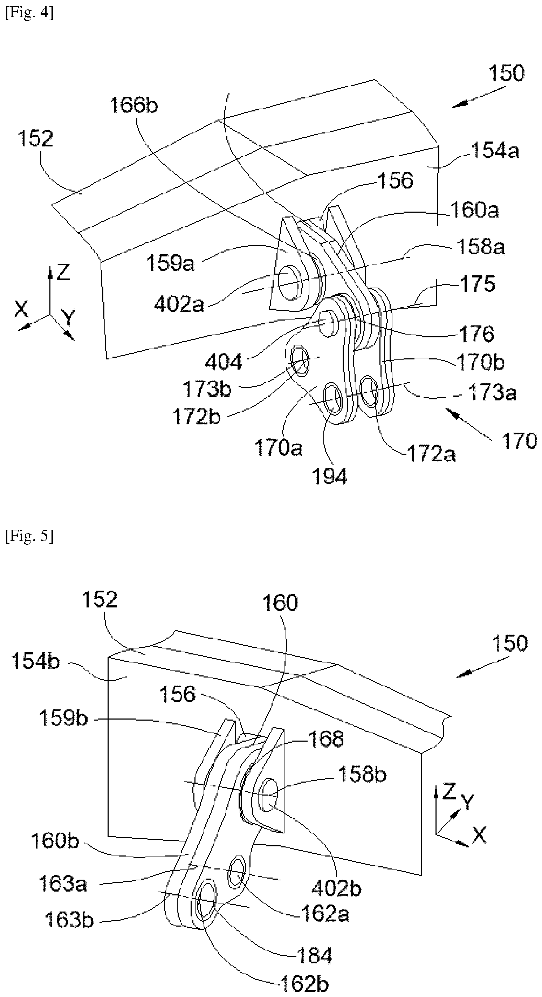

La Fig. 3 montre le mât réacteur 150 en vue éclatée et les Figs. 4 et 5 montrent le mât réacteur 150 respectivement du côté bâbord et du côté tribord.

La structure 152 du mât réacteur 150 prend la forme d'un caisson qui comporte entre autres deux faces latérales 154a-b, respectivement à bâbord et à tribord. Les deux faces latérales 154a-b sont disposées de part et d'autre du plan médian XZ et sont globalement parallèles audit plan médian XZ et forment les parois latérales extérieures de la structure 152 du mât réacteur 150.

La structure 152 du mât réacteur 150 est traversée par un tunnel 156. Le tunnel 156 s'étend globalement perpendiculairement au plan médian XZ, c'est-à-dire selon la direction transversale Y. Le tunnel 152 présente à chacune de ses deux extrémités une ouverture et chaque ouverture débouche au niveau d'une des faces latérales 154a-b. Il y a donc une ouverture à bâbord et une ouverture à tribord.

Le mât réacteur 150 comporte également un palonnier 160 qui est logé dans le tunnel 156 où chaque extrémité du palonnier 160 dépasse par une ouverture du tunnel 156. Le palonnier 160 présente ainsi une première extrémité 160a, ici à bâbord, qui s'étend au-delà de la face latérale 154a à bâbord, et une deuxième extrémité 160b, ici à tribord qui s'étend au-delà de la face latérale 154b à tribord. Selon les cas, la première et la deuxième extrémités 160a-b du palonnier 160 peuvent être inversées.

Le palonnier 160 est fixé de manière articulée à chaque face latérale 154a-b par un premier point de liaison 158a-b.

La première extrémité 160a du palonnier 160 présente un premier alésage 164 dont l'axe est globalement parallèle à la direction longitudinale X et qui est arrangé de manière à être à l'extérieur de la structure 152 du mât réacteur 150 lorsque le palonnier 160 est en place dans le tunnel 156.

La deuxième extrémité 160b du palonnier 160 présente deux deuxièmes alésages 162a-b où l'axe de chacun est globalement parallèle à la direction longitudinale X et où chacun est arrangé de manière à être à l'extérieur de la structure 152 du mât réacteur 150 lorsque le palonnier 160 est en place dans le tunnel 156.

Chaque deuxième alésage 162a-b est arrangé de manière à former avec la structure 210 du moteur 106, un deuxième point de liaison 163a-b qui assure une fixation articulée entre la structure 210 du moteur 106 et le palonnier 160.

Le mât réacteur 150 comporte également une bielle 170 fixée de manière articulée audit premier alésage 164. La bielle 170 présente également deux troisièmes alésages 172a-b où l'axe de chacun est globalement parallèle à la direction longitudinale X.

Chaque troisième alésage 172a-b est arrangé de manière à former avec la structure 210 du moteur 106, un troisième point de liaison 173a-b qui assure une fixation articulée entre la structure 210 du moteur 106 et la bielle 170.

Le passage du palonnier 160 dans le tunnel 156 permet de rapprocher le moteur 106 du mât réacteur 150 et réaliser ainsi un gain de place verticalement. En outre, un tel arrangement permet d'intégrer la reprise des efforts à l'intérieur de la structure 152 du mât réacteur 106.

Dans le mode de réalisation de l'invention présenté à la Fig. 3, chaque point de liaison 158a-b, 163a-b, 173a-b, 175 prend préférentiellement la forme d'une liaison rotule.

Dans le mode de réalisation de l'invention présenté à la Fig. 3, chaque premier point de liaison 158a-b est constitué d'une première chape femelle 159a-b fixée à l'extérieur de la face latérale 154a-b correspondante audit premier point de liaison 158a-b et d'une chape mâle unique constituée par le palonnier 160, où le palonnier 160 est disposé à l'intérieur de chaque première chape femelle 159a-b.

Classiquement, chaque première chape femelle 159a-b est constituée de deux parois parallèles disposées de part et d'autre de l'ouverture du tunnel 156 correspondant à ladite face latérale 154a-b et chaque paroi de la première chape femelle 159a-b est traversée par un alésage dont l'axe est globalement parallèle à la direction longitudinale X. Pour chaque première chape femelle 159a-b, le palonnier 160 présente un alésage 166a-b dont l'axe est coaxial à l'axe des alésages de ladite première chape femelle 159a-b.

Chaque premier point de liaison 158a-b comporte également un premier axe de liaison 402a-b (Figs. 4 et 5), et une première bague rotulée 168 insérée et fixée dans l'alésage 166a-b du palonnier 160 correspondant audit premier point de liaison 158a-b, et où le premier axe de liaison 402a-b est logé et fixé dans la première bague rotulée 168 et logé libre en rotation dans les alésages de la première chape femelle 159a-b correspondant audit premier point de liaison 158a-b.

Dans le mode de réalisation de l'invention présenté à la Fig. 3, chaque deuxième point de liaison 163a-b est constitué d'une deuxième chape femelle 180 solidaire de la structure 210 du moteur 106 et d'une chape mâle unique constituée par la deuxième extrémité 160b du palonnier 160 qui est disposée à l'intérieur de chaque deuxième chape femelle 180.

Chaque deuxième chape femelle 180 est constituée de deux parois parallèles et chaque paroi est traversée par un alésage 182 dont l'axe est globalement parallèle à la direction longitudinale X. Pour chaque deuxième chape femelle 180, le palonnier 160 présente un deuxième alésage 162a-b dont l'axe est coaxial à l'axe des alésages 182 de ladite deuxième chape femelle 180. Dans le mode de réalisation de l'invention présenté à la Fig. 3, chaque paroi d'une deuxième chape femelle 180 est monobloc avec l'une des parois de l'autre deuxième chape femelle 180.

Chaque deuxième point de liaison 163a-b comporte également un deuxième axe de liaison et une deuxième bague rotulée 184 insérée et fixée dans le deuxième alésage 162a-b du palonnier 160 correspondant audit deuxième point de liaison 163a-b, et où le deuxième axe de liaison est logé et fixé dans la deuxième bague rotulée 184 et logé libre en rotation dans les alésages 182 de la deuxième chape femelle 180 correspondant audit deuxième point de liaison 163a-b.

Pour des raisons de sécurité, la bielle 170 est constituée de deux manilles 170a-b qui sont disposées l'une derrière l'autre le long de la direction longitudinale X et chacun des troisièmes alésages 172a-b est constitué d'un troisième sous-alésage réalisé dans l'une des manilles 170a-b et d'un troisième sous-alésage réalisé dans l'autre des manilles 170b-a. Les troisièmes sous-alésages correspondant à un même troisième alésage 172a-b sont coaxiaux.

Dans le mode de réalisation de l'invention présenté à la Fig. 3, chaque manille 170a-b présente un quatrième sous-alésage 174 dont l'axe est globalement parallèle à la direction longitudinale X. Les quatrièmes sous-alésages 174 sont coaxiaux entre eux et avec le premier alésage 164 et sont arrangés de manière à former avec le premier alésage 164, un quatrième point de liaison 175 qui assure une fixation articulée entre la bielle 170 et le palonnier 160.

Les deux manilles 170a-b sont disposées de part et d'autre de la première extrémité 160a du palonnier 160 pour former entre elles une quatrième chappe femelle.

Le quatrième point de liaison 175 comporte également un troisième axe de liaison 404 et une troisième bague rotulée 176 insérée et fixée dans le premier alésage 164 du palonnier 160 et où le troisième axe de liaison 404 est logé et fixé dans la troisième bague rotulée 176 et logé libre en rotation dans les quatrièmes sous-alésages 174.

Dans le mode de réalisation de l'invention présenté à la Fig. 3, chaque troisième point de liaison 173a-b est constitué d'une paire de troisièmes chapes femelles 190 solidaires de la structure 210 du moteur 106. Les deux troisièmes chapes femelles 190 de la paire sont disposées l'une derrière l'autre le long de la direction longitudinale X et il y a une troisième chape femelle 190 associée à l'une des manilles 170a-b et l'autre troisième chape femelle 190 associée à l'autre des manilles 170b-a.

Pour chaque troisième chape femelle 190 de la paire, le troisième point de liaison 173a-b correspondant comporte ainsi une chape mâle constituée par une des bielles 170a-b disposées à l'intérieur de ladite troisième chape femelle 190.

Les deux troisièmes chapes femelles 190 d'une paire sont constituées ici de trois parois parallèles disposées les unes à la suite des autres et chaque troisième chape femelle 190 est formée par deux parois voisines. Chaque paroi est traversée par un alésage 192 dont l'axe est globalement parallèle à la direction longitudinale X. Pour chaque troisième chape femelle 190, la manille 170a-b présente un troisième sous-alésage dont l'axe est coaxial à l'axe des alésages 192 de ladite troisième chape femelle 190. Dans le mode de réalisation de l'invention présenté à la Fig. 3, chaque paroi d'une troisième chape femelle 190 correspondant à un troisième point de liaison 173a-b est monobloc avec l'une des parois de l'autre troisième chape femelle 190 correspondant à l'autre troisième point de liaison 173b-a.

Chaque troisième point de liaison 173a-b comporte également un quatrième axe de liaison et une quatrième bague rotulée 194 insérée et fixée dans les troisièmes sous-alésages de chaque manille 170a-b correspondant audit troisième point de liaison 173a-b, et où le quatrième axe de liaison est logé et fixé dans la quatrième bague rotulée 194 et logé libre en rotation dans les troisièmes sous-alésages correspondant audit troisième point de liaison 173a-b.

Pour des raisons de sécurité, le troisième axe de liaison 404 du quatrième point de liaison 175 est doublé, c'est-à-dire qu'il est constitué d'un premier cylindre creux et d'un deuxième cylindre emmanché dans le premier cylindre.

Pour des raisons de sécurité, le palonnier 160 et chaque manille 170a-b sont constitués de deux plaques fixées l'une contre l'autre, où, pour chaque alésage ou sous-alésage traversé par un axe de liaison, chaque plaque présente un perçage formant une partie dudit alésage ou sous-alésage. Ainsi, en cas de rupture de l'une des plaques d'une manille 170a-b, l'autre plaque reste opérationnelle.

Les différents axes de liaison assurent le transfert des efforts du moteur 106 vers la structure 152 du mât réacteur 150 en créant des chemins de reprise d'efforts à travers les différents éléments.

Dans le mode de réalisation de l'invention présenté sur les Figs. 3 à 5, l'un des deuxièmes alésages 162a-b et l'un des troisièmes alésages 172a-b participent au chemin principal de reprise d'efforts (c'est-à-dire au fonctionnement en conditions nominales), tandis que l'autre des deuxièmes alésages 162b-a et l'autre des troisièmes alésages 172b-a constituent un système en attente qui ne participe au chemin de reprise d'efforts qu'en cas de rupture respectivement dudit l'un des deuxièmes alésages 162a-b ou dudit l'un des troisièmes alésages 172a-b. Bien sûr, une disposition inverse est également possible.

Ainsi en cas de rupture du chemin de reprise d'efforts au niveau du deuxième alésage 162a-b participant au chemin principal de reprise d'efforts, respectivement du troisième alésage 172a-b participant au chemin principal de reprise d'efforts, le deuxième 162b-a respectivement, le troisième alésage 172b-a qui ne participent pas au chemin principal de reprise d'efforts, assurent la reprise des efforts en conditions dégradées.

Ainsi en cas de rupture du chemin de reprise d'efforts au niveau de l'une des premières chapes femelles 159a-b ou du premier axe de liaison 402a-b associé, le palonnier 160 va pivoter autour de l'autre première chape femelle 159b-a et venir en butée contre les parois du tunnel 156 et donc la structure 152 du mât réacteur 150 pour assurer la reprise des efforts.

## Revendications

1. Mât réacteur (150) pour la fixation d'un moteur (106) d'un aéronef (100), le mât réacteur (150) comportant :
- une structure (152) destinée à être fixée sous une aile (104) de l'aéronef (100) et présentant deux faces latérales (154a-b) où la structure (152) est traversée par un tunnel (156) où chacune des deux extrémités du tunnel (156) débouche au niveau d'une des faces latérales (154a-b),
- un palonnier (160) logé dans le tunnel (156) et fixé de manière articulée à chaque face latérale (154a-b) par un premier point de liaison (158a-b), où une première extrémité (160a) du palonnier (160) présente un premier alésage (164), et où une deuxième extrémité (160b) du palonnier (160) présente deux deuxièmes alésages (162a-b) destinés à former chacun un deuxième point de liaison (163a-b) avec le moteur (106), et
- une bielle (170) fixée de manière articulée audit premier alésage (164) et présentant deux troisièmes alésages (172a-b) destinés à former chacun, un troisième point de liaison (173a-b) avec le moteur (106).

2. Mât réacteur (150) selon la revendication 1, **caractérisé en ce que** chaque premier point de liaison (158a-b) est constitué d'une première chape femelle (159a-b) fixée à l'extérieur de la face latérale (154a-b) correspondante, d'une chape mâle unique constituée par le palonnier (160), où le palonnier (160) est disposé à l'intérieur de chaque première chape femelle (159a-b), d'un premier axe de liaison (402a-b) et d'une première bague rotulée (168) insérée et fixée dans un alésage (166a-b) du palonnier (160) prévu à cet effet et où le premier axe de liaison (402a-b) est logé et fixé dans la première bague rotulée (168) et logé libre en rotation dans des alésages de la première chape femelle (159a-b) prévus à cet effet.

3. Mât réacteur (150) selon l'une des revendications 1 ou 2, **caractérisé en ce que** la bielle (170) est constituée de deux manilles (170a-b) disposées de part et d'autre de la première extrémité (160a) du palonnier (160), **en ce que** chacun des troisièmes alésages (172a-b) est constitué d'un troisième sous-alésage réalisé dans l'une des manilles (170a-b) et d'un troisième sous-alésage réalisé dans l'autre des manilles (170b-a), **en ce qu'**une troisième bague rotulée (176) est insérée et fixée dans le premier alésage (164) du palonnier (160) et **en ce qu'**un troisième axe de liaison (404) est logé et fixé dans la troisième bague rotulée (176) et logé libre en rotation dans un quatrième sous-alésage (174) prévu à cet effet dans chaque manille (170a-b).

4. Aéronef (100) comportant une aile (104), un moteur (106) présentant une structure (210) et un mât réacteur (150) selon l'une des revendications précédentes, où la structure (152) du mât réacteur (150) est fixée sous l'aile (104) et où les deux deuxièmes alésages (162a-b) forment chacun un deuxième point de liaison (163a-b) avec la structure (210) du moteur (106), et où les deux troisièmes alésages (172a-b) forment chacun, un troisième point de liaison (173a-b) avec la structure (210) du moteur (106).

5. Aéronef (100) selon la revendication précédente, **caractérisé en ce que** chaque deuxième point de liaison (163a-b) est constitué d'une deuxième chape femelle (180) solidaire de la structure (210) du moteur (106), d'une chape mâle unique constituée par la deuxième extrémité (160b) du palonnier (160) où le palonnier (160) est disposé à l'intérieur de chaque deuxième chape femelle (180), d'un deuxième axe de liaison et d'une deuxième bague rotulée (184) insérée et fixée dans le deuxième alésage (162a-b) du palonnier (160) et où le deuxième axe de liaison est logé et fixé dans la deuxième bague rotulée (184) et logé libre en rotation dans des alésages (182) prévus à cet effet dans la deuxième chape femelle (180).

6. Aéronef (100) selon l'une des revendications 4 ou 5 lorsque la revendication 4 dépend de la revendication 3, **caractérisé en ce que** chaque troisième point de liaison (173a-b) est constitué d'une paire de troisièmes chapes femelles (190) solidaires de la structure (210) du moteur (106), pour chaque troisième chape femelle (190) de la paire, d'une chape mâle constituée par une des bielles (170a-b) disposées à l'intérieur de ladite troisième chape femelle (190), d'un quatrième axe de liaison et d'une quatrième bague rotulée (194) insérée et fixée dans les troisièmes sous-alésages de chaque manille (170a-b) et où le quatrième axe de liaison est logé fixé dans la quatrième bague rotulée (194) et logé libre en rotation dans les troisièmes sous-alésages.

## Patentansprüche

1. Triebwerkspylon (150) zur Befestigung eines Motors (106) eines Flugzeugs (100), wobei der Triebwerkspylon (150) Folgendes umfasst:
- eine Struktur (152), die dazu bestimmt ist, unter einer Tragfläche (104) des Flugzeugs (100) befestigt zu sein, und zwei Seitenflächen (154a-b) aufweist, wobei die Struktur (152) von einem Tunnel (156) durchquert wird, wobei jedes der zwei Enden des Tunnels (156) an einer der Seitenflächen (154a-b) mündet,
- eine Traverse (160), die in dem Tunnel (156) aufgenommen ist und durch einen ersten Verbindungspunkt (158a-b) gelenkig an jeder Seitenfläche (154a-b) befestigt ist, wobei ein erstes Ende (160a) der Traverse (160) eine erste Bohrung (164) aufweist und wobei ein zweites Ende (160b) der Traverse (160) zwei zweite Bohrungen (162a-b) aufweist, die dazu bestimmt sind, jeweils einen zweiten Verbindungspunkt (163a-b) mit dem Motor (106) zu bilden, und
- ein Zwischenglied (170), das gelenkig an der ersten Bohrung (164) befestigt ist und zwei dritte Bohrungen (172a-b) aufweist, die dazu bestimmt sind, jeweils einen dritten Verbindungspunkt (173a-b) mit dem Motor (106) zu bilden.

2. Triebwerkspylon (150) nach Anspruch 1, **dadurch gekennzeichnet, dass** jeder erste Verbindungspunkt (158ab) aus einem ersten Gabelstück-Aufnahmeteil (159a-b), das an der Außenseite der entsprechenden Seitenfläche (154ab) befestigt ist, einem einzigen Gabelstück-Steckteil, das aus der Traverse (160) besteht, wobei die Traverse (160) innerhalb jedes ersten Gabelstück-Aufnahmeteils (159a-b) angeordnet ist, einer ersten Verbindungsachse (402a-b) und einem ersten Kugelring (168), der in eine hierzu vorgesehene Bohrung (166a-b) der Traverse (160) eingeführt und dort befestigt ist, besteht, und wobei die erste Verbindungsachse (402a-b) in dem ersten Kugelring (168) aufgenommen und befestigt ist und frei drehbar in hierzu vorgesehenen Bohrungen des ersten Gabelstück-Aufnahmeteils (159a-b) aufgenommen ist.

3. Triebwerkspylon (150) nach einem der Ansprüche 1 oder 2, **dadurch gekennzeichnet, dass** das Zwischenglied (170) aus zwei Bügeln (170a-b) besteht, die zu beiden Seiten des ersten Endes (160a) der Traverse (160) angeordnet sind, dass jede der dritten Bohrungen (172ab) aus einer dritten Teilbohrung, die in einem der Bügel (170a-b) ausgeführt ist, und einer dritten Teilbohrung, die in dem anderen der Bügel (170b-a) ausgeführt ist, besteht, dass ein dritter Kugelring (176) in die erste Bohrung (164) der Traverse (160) eingeführt und dort befestigt ist und dass eine dritte Verbindungsachse (404) in dem dritten Kugelring (176) aufgenommen und befestigt ist und frei drehbar in einer hierzu in jedem Bügel (170ab) vorgesehenen vierten Teilbohrung (174) aufgenommen ist.

4. Flugzeug (100), das eine Tragfläche (104), einen Motor (106), der eine Struktur (210) aufweist, und einen Triebwerkspylon (150) nach einem der vorhergehenden Ansprüche umfasst, wobei die Struktur (152) des Triebwerkspylons (150) unter der Tragfläche (104) befestigt ist und wobei die zwei zweiten Bohrungen (162ab) jeweils einen zweiten Verbindungspunkt (163a-b) mit der Struktur (210) des Motors (106) bilden und wobei die zwei dritten Bohrungen (172a-b) jeweils einen dritten Verbindungspunkt (173a-b) mit der Struktur (210) des Motors (106) bilden.

5. Flugzeug (100) nach dem vorhergehenden Anspruch, **dadurch gekennzeichnet, dass** jeder zweite Verbindungspunkt (163a-b) aus einem zweiten Gabelstück-Aufnahmeteil (180), das mit der Struktur (210) des Motors (106) fest verbunden ist, einem einzigen Gabelstück-Steckteil, das aus dem zweiten Ende (160b) der Traverse (160) besteht, wobei die Traverse (160) innerhalb jedes zweiten Gabelstück-Aufnahmeteils (180) angeordnet ist, einer zweiten Verbindungsachse und einem zweiten Kugelring (184), der in die zweite Bohrung (162a-b) der Traverse (160) eingeführt und dort befestigt ist, besteht, und wobei die zweite Verbindungsachse in dem zweiten Kugelring (184) aufgenommen und befestigt ist und frei drehbar in hierzu in dem zweiten Gabelstück-Aufnahmeteil (180) vorgesehenen Bohrungen (182) aufgenommen ist.

6. Flugzeug (100) nach einem der Ansprüche 4 oder 5, wenn Anspruch 4 von Anspruch 3 abhängt, **dadurch gekennzeichnet, dass** jeder dritte Verbindungspunkt (173a-b) aus einem Paar von dritten Gabelstück-Aufnahmeteilen (190), die fest mit der Struktur (210) des Motors (106) verbunden sind, für jedes dritte Gabelstück-Aufnahmeteil (190) des Paares, einem einzigen Gabelstück-Steckteil, das aus einem der Zwischenglieder (170a-b) besteht, die innerhalb des dritten Gabelstück-Aufnahmeteils (190) angeordnet sind, einer vierten Verbindungsachse und einem vierten Kugelring (194), der in die dritten Teilbohrungen jedes Bügels (170a-b) eingeführt und dort befestigt ist, besteht, und wobei die vierte Verbindungsachse in dem vierten Kugelring (194) aufgenommen und befestigt ist und frei drehbar in den dritten Teilbohrungen aufgenommen ist.

## Claims

1. Engine pylon (150) for fastening an engine (106) of an aircraft (100), the engine pylon (150) having:
- a structure (152) intended to be fastened beneath a wing (104) of the aircraft (100) and having two lateral faces (154a-b), wherein the structure (152) has a tunnel (156) passing through it, wherein each of the two ends of the tunnel (156) emerges at one of the lateral faces (154a-b),
- a spreader (160) housed in the tunnel (156) and fastened in an articulated manner to each lateral face (154a-b) by a first connection point (158a-b), wherein a first end (160a) of the spreader (160) has a first bore (164), and wherein a second end (160b) of the spreader (160) has two second bores (162a-b) each intended to form a second connection point (163a-b) with the engine (106), and
- a rod (170) fastened in an articulated manner to said first bore (164) and having two third bores (172a-b) each intended to form a third connection point (173a-b) with the engine (106).

2. Engine pylon (150) according to Claim 1, **characterized in that** each first connection point (158a-b) is constituted of a first female clevis (159a-b) fastened to the outside of the corresponding lateral face (154a-b), a single male clevis constituted by the spreader (160), wherein the spreader (160) is disposed inside each first female clevis (159a-b), a first connection pin (402a-b) and a first ball joint ring (168) inserted and fastened in a bore (166a-b) of the spreader (160) provided for that purpose and wherein the first connection pin (402a-b) is housed and fastened in the first ball joint ring (168) and housed free to rotate in bores of the first female clevis (159a-b) provided for that purpose.

3. Engine pylon (150) according to either of Claims 1 and 2, **characterized in that** the rod (170) is constituted of two shackles (170a-b) disposed on either side of the first end (160a) of the spreader (160), **in that** each of the third bores (172a-b) is constituted of a third sub-bore made in one of the shackles (170a-b) and a third sub-bore made in the other of the shackles (170b-a), **in that** a third ball joint ring (176) is inserted and fastened in the first bore (164) of the spreader (160) and **in that** a third connection pin (404) is housed and fastened in the third ball joint ring (176) and housed free to rotate in a fourth sub-bore (174) provided for that purpose in each shackle (170a-b).

4. Aircraft (100) having a wing (104), an engine (106) having a structure (210) and an engine pylon (150) according to one of the preceding claims, wherein the structure (152) of the engine pylon (150) is fastened beneath the wing (104) and wherein the two second bores (162a-b) each form a second connection point (163a-b) with the structure (210) of the engine (106), and wherein the two third bores (172a-b) each form a third connection point (173a-b) with the structure (210) of the engine (106).

5. Aircraft (100) according to the preceding claim, **characterized in that** each second connection point (163a-b) is constituted of a second female clevis (180) as one with the structure (210) of the engine (106), a single male clevis constituted by the second end (160b) of the spreader (160), wherein the spreader (160) is disposed inside each second female clevis (180), a second connection pin and a second ball joint ring (184) inserted and fastened in the second bore (162a-b) of the spreader (160) and wherein the second connection pin is housed and fastened in the second ball joint ring (184) and housed free to rotate in bores (182) provided for that purpose in the second female clevis (180).

6. Aircraft (100) according to either of Claims 4 and 5 when Claim 4 is dependent on Claim 3, **characterized in that** each third connection point (173a-b) is constituted of a pair of third female clevises (190) as one with the structure (210) of the engine (106), for each third female clevis (190) of the pair, a male clevis constituted by one of the rods (170a-b) disposed inside said third female clevis (190), a fourth connection pin and a fourth ball joint ring (194) inserted and fastened in the third sub-bores of each shackle (170a-b) and wherein the fourth connection pin is housed fastened in the fourth ball joint ring (194) and housed free to rotate in the third sub-bores.
